# EUROPEAN PATENT APPLICATION

(11) **EP 1 925 709 A1**
(43) Date of publication of application: **28.05.2008**
(21) Application number: 06124610.4
(22) Date of filing: 23.11.2006
(51) Int. Cl.: D06F 39/00, C02F 1/32, A47L 15/42

(54) **Electric household washing appliance**

(71) Applicant: Electrolux Home Products Corporation N.V., 1930 Zaventem (BE)
(72) Inventor: Trivillin Fiorella, 33170 Pordenone (IT); Krische, Bernd, 132 39 Saltsjo-boo (SE)
(74) Representative: Jorio, Paolo

(57) **Abstract**

An electric household washing appliance has a wash chamber (2) for a number of articles to be washed; and a hydraulic circuit (3) for feeding the water drained from the wash chamber (2) to a processing unit (4), and for feeding the water purified in the processing unit (4) back into the wash chamber (2); the processing unit (4) having a photocatalytic reactor (9).

## Description

The present invention relates to an electric household washing appliance, in particular a dishwasher or a washing machine.

In the electric household appliance industry, an electric household appliance is known comprising a hydraulic circuit for feeding water through a wash chamber housing a number of articles to be washed.

The hydraulic circuit comprises a first branch for feeding the water drained from the wash chamber to a processing unit; and a second branch for feeding the water purified in the processing unit back into the wash chamber.

The processing unit normally comprises at least one filter for mechanically filtering and disinfecting the water drained from the wash chamber.

Known electric household washing appliances of the above type have various drawbacks, mainly due to the processing unit failing to correctly and sufficiently purify the water drained from the wash chamber.

It is an object of the present invention to provide an electric household washing appliance designed to eliminate the aforementioned drawbacks, and which is cheap and easy to produce.

According to the present invention, there is provided an electric household washing appliance as claimed in the accompanying Claims.

A non-limiting embodiment of the present invention will be described by way of example with reference to the accompanying drawings, in which:
Figure 1 shows, schematically, a preferred embodiment of the electric household appliance according to the present invention;
Figure 2 shows a schematic detail of the electric household appliance in Figure 1;
Figure 3 shows, schematically, a first variation of the Figure 2 detail;
Figure 4 shows, schematically, a second variation of the Figure 2 detail.

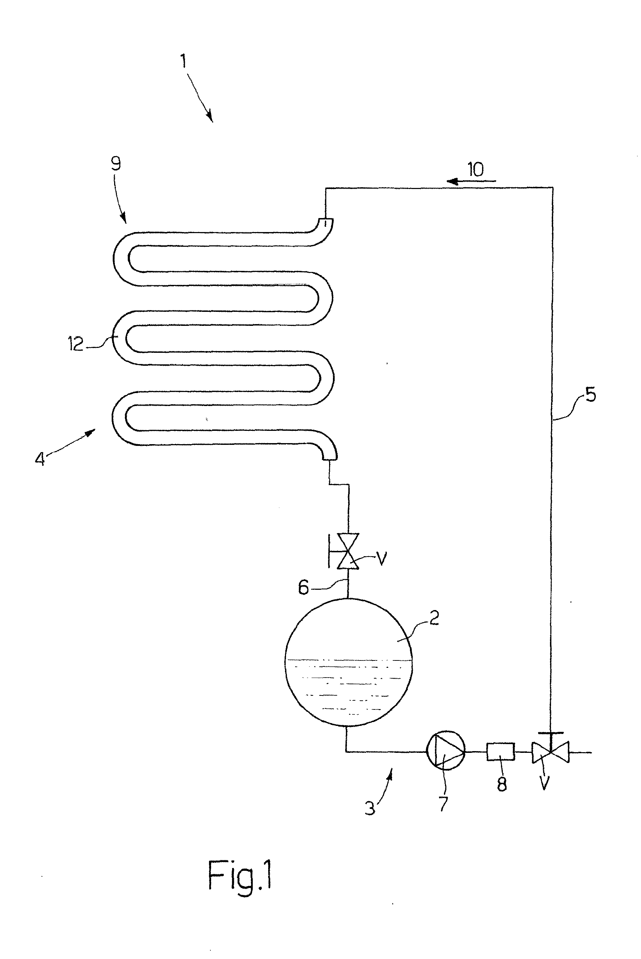

Number 1 in Figure 1 indicates as a whole an electric household appliance, e.g. a washing machine or dishwasher, for washing articles (not shown).

Electric household appliance 1 comprises a known wash chamber 2 for housing a number of articles (not shown) to be washed; and a hydraulic circuit 3 for feeding water through chamber 2.

Circuit 3 comprises a processing unit 4 for processing the water drained from chamber 2; a first branch 5 for feeding the drain water from chamber 2 to unit 4; a second branch 6 for feeding the water processed in unit 4 back into chamber 2; a feed pump 7 located along branch 5 to pump the water along circuit 3; and two on-off valves V located along branches 5 and 6 respectively.

Unit 4 in turn comprises a known filtering device 8 for mechanically filtering solid particles dispersed in the drain water; and a photocatalytic reactor 9 downstream from device 8 in the water flow direction 10 along circuit 3.

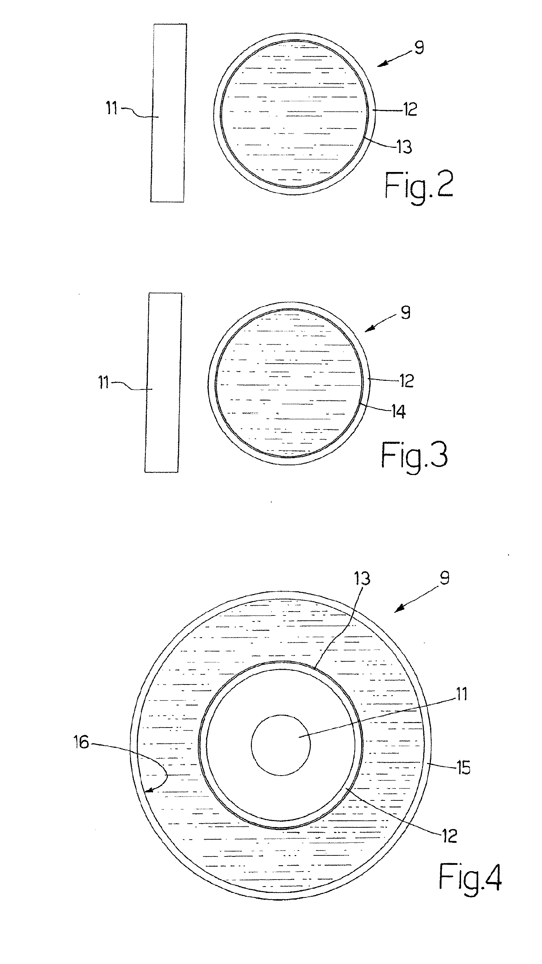

As shown in Figures 1 and 2, reactor 9 comprises an electromagnetic radiation source 11 - in the example shown, a UV lamps array or a number of UV LEDs; and a conduit 12 connected hydraulically to branches 5 and 6 so that the water flows through it, and which is preferably in the form of a coil, is positioned facing source 11, is made of material transparent to UV radiation (in the example shown, glass), and is at least partially coated with a layer 13 of photocatalytic material applied to the inner surface of conduit 12.

The photocatalytic material is preferably, though not necessarily, titanium dioxide based, but may alternatively be iron, silver, copper, tungsten or zinc oxides based or combinations thereof.

According to a variation not shown, source 11 cooperates with at least one radiation reflector for reflecting the radiation emitted by source 11 onto conduit 12.

In actual use, the photocatalytic material of layer 13 is activated by the UV radiation emitted by source 11 to degrade the pollutants, e.g. dirt and detergents, and to kill bacteria in the water drained from chamber 2.

By combining the filtering action of device 8 with the disinfecting and purifying action of reactor 9, the water drained from chamber 2 by branch 5 can therefore be fed back into chamber 2 by branch 6 for use in another wash cycle of electric household appliance 1.

The Figure 3 variation differs from Figures 1 and 2 solely by layer 13 being replaced by a layer 14 applied to the inner surface of conduit 12 and comprising a supporting material (for example a non-wowen material) treated with a photocatalytic coating.

The Figure 4 variation differs from Figures 1 to 3, in that:
layer 13 is applied to the outer surface of conduit 12 and conduit 12 is mounted inside a pipe 15 substantially coaxial with conduit 12; and
source 11 is mounted inside conduit 12 to illuminate the photocatalytic material of layer 13 from inside conduit 12.

Pipe 15 is made of steel or plastic material, and, together with conduit 12, defines a feed channel 16 connected hydraulically to branches 5 and 6 so that the drain water from chamber 2 flows along channel 16.

According to a variation not shown, layer 13 is applied to the inner surface of pipe 15.

## Claims

1. An electric household washing appliance, in particular a dishwasher or washing machine, the electric household appliance comprising a wash chamber (2) for housing a number of articles; and a hydraulic circuit (3) for feeding water through the wash chamber (2); the hydraulic circuit (3) comprising a processing unit (4) for processing the water drained from the wash chamber (2), a first branch (5) for feeding the drain water from the wash chamber (2) to the processing unit (4), and a second branch (6) for feeding the water processed in the processing unit (4) back into the wash chamber (2); and the electric household appliance being **characterized in that** the processing unit (4) comprises a photocatalytic reactor (9).

2. An electric household appliance as claimed in Claim 1, wherein the photocatalytic reactor (9) comprises a photocatalyst (12, 13; 12, 14); and an electromagnetic radiation source (11) to activate the photocatalyst (12, 13; 12, 14).

3. An electric household appliance as claimed in Claim 2, wherein said electromagnetic radiation source (11) cooperates with at least one radiation reflector for reflecting the electromagnetic radiation onto the photocatalyst (12, 13; 12, 14).

4. An electric household appliance as claimed in Claim 2 or 3, wherein the photocatalytic reactor (9) comprises a conduit (12) made of material transparent to electromagnetic radiation and at least partially coated with a photocatalytic material (13).

5. An electric household appliance as claimed in Claim 4, wherein the photocatalytic material (13) is applied to an inner wall of the conduit (12).

6. An electric household appliance as claimed in Claim 2 or 3, wherein the photocatalytic reactor (9) comprises a conduit (12) made of material transparent to electromagnetic radiation and covered with a layer (14) comprising a supporting material, preferably a non-woven material, treated with a photocatalytic coating.

7. An electric household appliance as claimed in Claim 6, wherein the layer (14) is applied to an inner wall of the conduit (12).

8. An electric household appliance as claimed in any one of Claims 4 to 7, wherein water flows along the conduit (12), and the electromagnetic radiation source (11) is located outside the conduit (12).

9. An electric household appliance as claimed in Claim 4 or 5, wherein the photocatalytic reactor (9) also comprises a further conduit (15) housing said conduit (12), and which, together with said conduit (12), defines a water feed channel (16); the electromagnetic radiation source (11) being housed inside said conduit (12).

10. An electric household appliance as claimed in Claim 9, wherein said further conduit (15) is made of steel.

11. An electric household appliance as claimed in Claim 9, wherein said further conduit (15) is made of plastic material.

12. An electric household appliance as claimed in any one of Claims 4 to 11, wherein said conduit (12) is made of glass.

13. An electric household appliance as claimed in any one of Claims 4 to 11, wherein said conduit (12) is made of plastic material.

14. An electric household appliance as claimed in any one of Claims 4 to 13, wherein said conduit (12) is in the form of a coil.

15. An electric household appliance as claimed in any one of Claims 2 to 14, wherein said electromagnetic radiation source (11) is a UV radiation source.

16. An electric household appliance as claimed in any one of Claims 2 to 15, wherein the photocatalyst (12, 13; 12, 14) is titanium dioxide based.

17. An electric household appliance as claimed in any one of Claims 2 to 15, wherein the photocatalyst (12, 13; 14) is iron, silver, copper, tungsten or zinc oxides based or combinations thereof.

18. An electric household appliance as claimed in any one of the foregoing Claims, wherein the processing unit (4) also comprises at least one filtering device (8) for mechanically filtering solid particles dispersed in the drain water.

19. An electric household appliance as claimed in Claim 18, wherein the filtering device (8) is located upstream from the photocatalytic reactor (9) in the drain water flow direction (10) along the hydraulic circuit (3).
